(19) Europäisches Patentamt
European Patent Office
Office européen des brevets

(11) **EP 4 015 587 A1**

(12) **EUROPEAN PATENT APPLICATION**

(43) Date of publication:
**22.06.2022 Bulletin 2022/25**

(21) Application number: **21214119.6**

(22) Date of filing: **13.12.2021**

(51) International Patent Classification (IPC):
**C09D 11/037** (2014.01)  **C09D 11/101** (2014.01)
**C09D 11/03** (2014.01)  **C09D 11/102** (2014.01)
**C09D 11/104** (2014.01)

(52) Cooperative Patent Classification (CPC):
**C09D 11/101; C09D 11/03; C09D 11/037;
C09D 11/102; C09D 11/104**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020 US 202017129703**

(71) Applicant: **Xerox Corporation
Webster, NY 14580 (US)**

(72) Inventors:
• **ALLEN, C Geoffrey
Webster, 14580 (US)**
• **BIRAU, Mihaela Maria
Webster, 14580 (US)**
• **MAGDALINIS, Aurelian Valeriu
Webster, 14580 (US)**

(74) Representative: **Grünecker Patent- und
Rechtsanwälte
PartG mbB
Leopoldstraße 4
80802 München (DE)**

(54) **INK COMPOSITION AND METHOD OF PRINTING**

(57) A white ink composition comprises an ink vehicle comprising at least one compound chosen from acrylate monomers, methacrylate monomers, acrylate oligomers and methacrylate oligomers; at least one polyol adhesive resin that is solid at 25°C; at least one photoinitiator; and at least one white colorant. A method of printing the ink composition is also disclosed.

FIG. 1

## Description

Field of the Disclosure

The present disclosure is directed to radiation curable white ink compositions. The ink compositions can be employed, for example, in digital offset printing processes.

Background

Ink-based digital printing employs a digital offset printing system, also known as a digital advanced lithographic imaging ("DALI") system. The DALI system is configured for lithographic printing using lithographic inks to form images based on digital image data, which may be variable from one image to the next. In other words, variable image data is used for producing images on a substrate that are changeable with each subsequent rendering of an image on the substrate in an image forming process.

For example, a digital offset printing process may include transferring radiation-curable ink onto a portion of an imaging member, such as an imaging cylinder or printing plate, that has been coated with a dampening fluid. Regions of the dampening fluid are selectively removed by exposure to a focused radiation source (e.g., a laser light source) to form pockets. In this manner a temporary pattern in the dampening fluid is formed over the imaging member. Ink is then applied to the imaging member and is retained in the pockets to form an ink image. The inked surface is then brought into contact with a substrate and the ink image transfers from the imaging member to the substrate. The dampening fluid may then be removed from the imaging member, a new uniform layer of dampening fluid is applied and the process repeated.

Digital offset printing inks differ from conventional inks because they are designed to meet demanding rheological specifications imposed by the lithographic printing process while being compatible with system component materials and meeting the functional requirements of sub-system components, including wetting and transfer. White inks, in particular, have very high pigment concentrations so as to achieve a relatively high opacity. In addition, white ink applications often demand thicker ink layers for covering relatively large areas compared to color inks. The thicker the ink layer the harder it is to get good ink transfer between the anilox roller, imaging member and final substrate. These differences can make meeting the demanding rheological specifications of white inks more difficult than for color inks.

Past DALI white ink compositions have often been designed for and cured with a Hg (D-bulb) light source. Light Emitting Diodes (LED's), such as those centered at about 365, 385, 395 and 405 nm peak-centered emissions and a plurality of other LED lamps having peak-centered emissions lower than about 365 nm and higher than about 405 nm, are very rapidly displacing Hg curing sources for reasons that LED lamps typically have: lower cost, lower heat generation and greener footprint among other reasons. However, many prior DALI ink compositions remain unsuitable for LED curing. There remains a need to develop DALI white ink compositions that can be successfully transferred from anilox roller to receiving substrate, cured with LED sources and whose prints have acceptable opacity and robustness qualities.

## SUMMARY

An embodiment of the present disclosure is directed to a white ink composition. The white ink composition comprises: an ink vehicle comprising at least one compound chosen from acrylate monomers, methacrylate monomers, acrylate oligomers and methacrylate oligomers; at least one polyol adhesive resin that is solid at 25°C; at least one photoinitiator; and at least one white colorant.

Another embodiment of the present disclosure is directed to a method for variable lithographic printing. The method comprises: applying a dampening fluid to an imaging member surface; forming a latent image by removing the dampening fluid from selective locations on the imaging member surface to form hydrophobic non-image areas and hydrophilic image areas; developing the latent image by applying a white ink composition to the hydrophilic image areas; and transferring the developed latent image to a receiving substrate. The white ink composition comprises: an ink vehicle comprising at least one compound chosen from acrylate monomers, methacrylate monomers, acrylate oligomers and methacrylate oligomers; at least one polyol adhesive resin that is solid at 25°C; at least one photoinitiator; and at least one white colorant.

The white inks of the present disclosure can provide one or more of the following advantages: the ink can be compatible with materials it is in contact with, including, for example, an imaging member, fountain solution, and other cured or non-cured inks; the inks can meet functional specifications of the sub-systems, including providing suitable wetting and transfer properties; the imaged inks can be transferred from anilox rollers to an imaging medium and from the imaging medium to the final substrate; the ink can both wet the blanket material homogeneously and transfer from the blanket to the substrate; the ink can provide for efficient transfer of the image layer, such as transfer of 90% of the image layer by weight; the ink can reduce or prevent ghost images appearing in subsequent prints; the inks can show improved adhesion to certain substrates, such as substrates comprising at least one material chosen from biaxially-oriented polyethylene terephthalate (commercially available as MYLAR ®), biaxially-oriented polypropylene ("BOPP"), polyethylene and other polymers or transparent polymers, compared to inks that are otherwise the same but do not have the polyol resin additives of the present disclosure; the white inks can, after curing with UV LED radiation, yield tack-free, high opacity prints and/or have good chemical resistance; provide for non-yellowing compositions before and/or after radiation curing; or mean tack (over 10 minute measurement time) range of about 55 to about 70 g-m; the inks can provide good anilox roller acceptance and high transfer from anilox roller to receiving substrate, such as clear polymer substrates (e.g., a MYLAR substrate).

It is to be understood that both the foregoing general description and the following detailed description are exemplary and explanatory only and are not restrictive of the present teachings, as claimed.

## BRIEF DESCRIPTION OF THE DRAWINGS

The accompanying drawing, which is incorporated in and constitutes a part of this specification, illustrates embodiments of the present teachings and together with the description, serves to explain the principles of the present teachings.

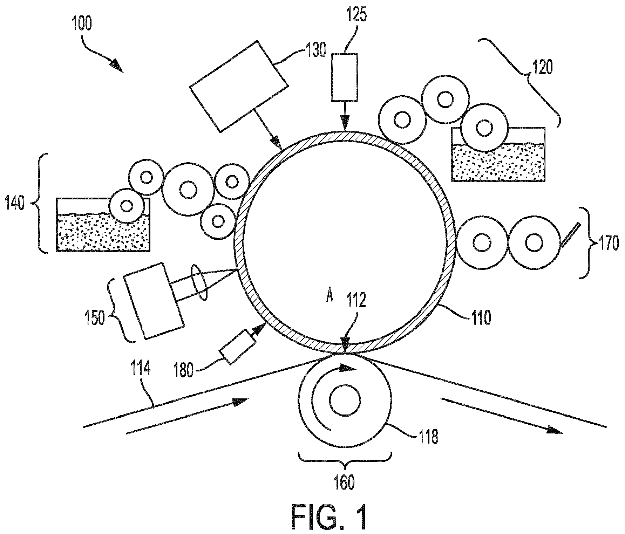

FIG. 1 shows an example of a system for digital advanced lithographic imaging that can be used to print the white inks of the present disclosure.

It should be noted that some details of the figure have been simplified and are drawn to facilitate understanding of the embodiments rather than to maintain strict structural accuracy, detail, and scale.

## DESCRIPTION OF THE EMBODIMENTS

Reference will now be made in detail to embodiments of the present teachings, examples of which are illustrated in the accompanying drawing. In the drawing, like reference numerals have been used throughout to designate identical elements. In the following description, reference is made to the accompanying drawing that forms a part thereof, and in which is shown by way of illustration a specific exemplary embodiment in which the present teachings may be practiced. The following description is, therefore, merely exemplary.

An embodiment of the present disclosure is directed to a white ink composition. The white ink composition comprises an ink vehicle comprising at least one compound chosen from acrylate monomers, methacrylate monomers, acrylate oligomers and methacrylate oligomers. The white ink composition further comprises at least one polyol adhesive resin that is solid at 25°C, at least one photoinitiator and at least one white colorant. Additional ingredients can also be included, as will be discussed below.

## Ink Vehicle

The ink vehicle employed in the compositions of the present disclosure can include at least one compound chosen from acrylate monomers, methacrylate monomers, acrylate oligomers and methacrylate oligomers. In an embodiment, the ink vehicle comprises both at least one acrylate or methacrylate monomer and at least one acrylate or methacrylate oligomer. The use of oligomers can allow for a faster cross-linking of the ink. The oligomer to monomer ratio can be adjusted to provide a desired balance between cross-linking rate and viscosity. In an embodiment, the ink is not miscible with water.

Any suitable acrylate and methacrylate monomers can be employed, including mono- or multi-functional acrylate monomers, mono- or multi-functional methacrylate monomers, or a combination thereof. Exemplary acrylate monomers may include polyester acrylates, acid modified epoxy diacrylates, Trimethylolpropane triacrylates, propoxylated trimethylolpropane triacrylates, pentaerythritol triacrylates, ethoxylated trimethylolpropane triacrylates and glycerol derivative triacrylate (e.g., EBECRYL 5500 from Allnex). Other triacrylates, monoacrylates, diacrylates, tetraacrylates, pentaacrylates, hexaacrylates and higher functional acrylate monomers, and various combinations thereof, can also be used in the ink compositions as vehicles.

Examples of suitable commercially available polyester acrylate monomers include Sartomer CN294E, Sartomer CD-501, Sartomer CN9014, Sartomer CN2282 and Sartomer CN2256, as well as EBECRYL 853, which is a low viscosity polyester triacrylate having a specific gravity of 1.10 g/cm$^3$, an APHA Color of 200 and a viscosity of 80 cps at 25°C. These polyester acrylate monomers can be useful for wetting pigments and improving tack and/or viscosity of the composition. Examples of suitable commercially available Trimethylolpropane triacrylate monomers include SR-492, SR-501, SR-444, SR-454, SR-499, SR-502, SR-9035 and SR-415 from Sartomer; and EBECRYL 853 and EBECRYL 5500 from Allnex. Trimethylolpropane triacrylate has a refractive index of 1.474, a specific gravity of 1.06 g/cm$^3$, an APHA Color of less than 300 and a viscosity range of 80 to 120 cps at 25°C. Sartomer SR-492 is a three mole propoxylated trimethylolpropane triacrylate and has a refractive index of 1.459, a specific gravity of 1.05 g/cm$^3$, a Tg of -15°C, an APHA Color of 30 and a viscosity of 90 cps at 25°C. Sartomer SR-501 is a six mole propoxylated trimethylolpropane triacrylate and has a refractive index of 1.4567, a specific gravity of 1.048 g/cm$^3$, a Tg of -2°C, an APHA Color of 90 and a viscosity of 125 cps at 25°C. Examples of suitable commercially available pentaerythritol triacrylate include Sartomer SR-444, which has a refractive index of 1.4801, a specific gravity of 1.162 g/cm$^3$, a Tg of 103°C, an APHA Color of 50 and a viscosity of 520 cps at 25°C. Examples of suitable commercially available ethoxylated trimethylolpropane triacrylate include Sartomer SR-454, which is a three mole ethoxylated trimethylolpropane triacrylate and has a refractive index of 1.4689, a specific gravity of 1.103 g/cm$^3$, a Tg of 120°C, an APHA Color of 55 and a viscosity of 60 cps at 25°C; Sartomer SR-499, which is a six mole ethoxylated trimethylolpropane triacrylate and has a refractive index of 1.4691, a specific gravity of 1.106 g/cm$^3$, a Tg of -8°C, an APHA Color of 50 and a viscosity of 85 cps at 25°C; Sartomer SR-502, which is a nine mole ethoxylated trimethylolpropane triacrylate and has a refractive index of 1.4691, a specific gravity of 1.11 g/cm$^3$, a Tg of -19°C, an APHA Color of 140 and a viscosity of 130 cps at 25°C; Sartomer SR-9035, which is a fifteen mole ethoxylated trimethylolpropane triacrylate and has a refractive index of 1.4695, a specific gravity of 1.113 g/cm$^3$, a Tg of -32°C, an APHA Color of 60 and a viscosity of 168 cps at 25°C; Sartomer SR-415, which is a twenty mole ethoxylated trimethylolpropane triacrylate and has a refractive index of 1.4699, a specific gravity of 1.115 g/cm$^3$, a Tg of -40°C, an APHA Color of 55 and a viscosity of 225 cps at 25°C. An example of a suitable commercially available glycol derivatized triacrylate is EBECRYL 5500, which is a low viscosity glycerol derivative triacrylate having a specific gravity of 1.07 g/cm$^3$, an APHA Color of 62 and a viscosity of 130 cps at 25°C. A commercially available example of an acid modified epoxy diacrylate is CN118, which is available from Sartomer, located in Exton, Pennsylvania. CN118 has a density of 9.47 lbs/gal, a refractive index of 1.529 at 25 °C, a $T_g$ of 48°C and a viscosity of 80,000 cps at 25°C.

Curable acrylate oligomers which can be used in the ink compositions as vehicles may include polyester acrylate oligomers, such as difunctional polyester acrylate oligomers, trifunctional polyester acrylate oligomers and tetrafunctional polyester acrylate oligomers; acrylated urethane oligomers, such as difunctional acrylated urethane oligomers, trifunctional urethane acrylate oligomers and tetrafunctional urethane acrylate oligomers; and aliphatic acrylate ester oligomers.

Examples of commercially available acrylate oligomers include Sartomer CN294E; CN2256; CN2282; CN9014 CN309, CN9010, CN2261, CN750 and CN2264. Sartomer CN294E is a tetrafunctional acrylated polyester oligomer that is a clear liquid having a specific gravity of 0.93 and a viscosity of 4,000 cps at 60°C. Sartomer CN2256 is a difunctional polyester acrylate oligomer and has a refractive index of 1.5062, a Tg of -22°C, a tensile strength of 675 psi, and a viscosity of 11,000 cps at 60°C. Sartomer CN2282 is tetrafunctional acrylated polyester and is a clear liquid having a specific gravity of 1.15 and a viscosity of 2,500 cps at 60°C. Sartomer CN9014 is a difunctional acrylated urethane and is a non-clear liquid having a specific gravity of 0.93 and a viscosity of 19,000 cps at 60°C. Sartomer CN309 is an oligomer containing an acrylate ester that derives from an aliphatic hydrophobic backbone, or in other words is an aliphatic acrylate ester. CN309 is a clear liquid having a specific gravity of 0.92, a density of 7.68 pounds/gallon, a surface tension of 26.3 dynes/cm, a viscosity of 150 cps at 25°C, and a viscosity of 40 cps at 60°C. CN9010 is a is an aliphatic urethane acrylate oligomer with a density of 1.201 g/cm$^3$ at 25 °C, a refractive index of 1.495 at 25 °C, a Tg of 103 °C and a viscosity of 2,650 cps at 60 °C. CN2261 is a trifunctional polyester acrylate oligomer with a density of 1.14 g/cm$^3$ at 25 °C, a refractive index of 1.512 at 25 °C, a Tg of 56 °C and a viscosity of 2,280 cps at 60 °C. CN750 is a trifunctional chlorinated polyester acrylate oligomer with a density of 1.3 g/cm$^3$ at 25 °C, a refractive index of 1.5072 at 25 °C, a Tg of 18 °C and a viscosity of 2,500 cps at 60 °C. CN2264 is a trifunctional polyester acrylate oligomer with a density of 9.67 lb/gal at 25 °C, a refractive index of 1.511 at 25 °C, a Tg of 43 °C and a viscosity of 1,250 cps at 60 °C. Further examples of commercially available acrylate oligomers include EBECRYL 8405, EBECRYL 8411, EBECRYL 8413, EBECRYL 8465, EBECRYL 8701, EBECRYL 9260, EBECRYL 546, EBECRYL 657, EBECRYL 809, EBECRYL 2870, and the like from Allnex. EBECRYL 8405 is a tetrafunctional urethane acrylate diluted as 80% by weight in 1,6-Hexanediol diacrylate (HDDA) and is a clear liquid, having a Gardner Color of 2 and a viscosity of 4,000 cps at 60°C. EBECRYL 8411 is a difunctional urethane acrylate diluted as 80% by weight in isobornylacrylate (IBOA) and is a clear liquid, having a viscosity range of 3,400 to 9,500 cps at 65°C. EBECRYL 8413 is a difunctional urethane acrylate diluted as 67% by weight in IBOA and is a clear liquid having a viscosity of 35,000 cps at 60°C. EBECRYL 8465 is a trifunctional urethane acrylate that is a clear liquid having a Gardner Color of 2 and a viscosity of 21,000 cps at 60°C. EBECRYL 8701 is a trifunctional urethane acrylate that is a clear liquid having a Gardner Color of 2 and a viscosity of 4,500 cps at 60°C. EBECRYL 9260 is a trifunctional urethane acrylate that is a clear liquid having a Gardner Color of 2 and a viscosity of 4,000 cps at 60°C. EBECRYL 546 is a trifunctional polyester acrylate that is a clear liquid having a Gardner Color of 1.5 and a viscosity of 350,000 cps at 25°C. EBECRYL 657 is a tetrafunctional polyester acrylate that is a clear liquid having a Gardner Color of 4 and a viscosity of 125,000 cps at 25°C. EBECRYL 809 is a trifunctional polyester acrylate that is a clear liquid having a Gardner Color of 3 and a viscosity of 1,300 cps at 60°C. EBECRYL 2870 is a fatty acid modified polyester hexaacrylate oligomer having a density of 1.10 g/cm$^3$ at 25° C and a viscosity of 4,100 cps at 60 °C. Further examples of commercially available acrylate oligomers include amino-modified, multi-functional polyester acrylate oligomers such as Soltech Ltd. Polyester Acrylate SP 283, which has a density of 1.14 g/cm$^3$, a viscosity of about 1,000 to about 2,000 cps at 25 °C.

Methacrylate analogs of any of the acrylate monomers or acrylate oligomers disclosed herein can be employed in the compositions of the present disclosure. Such methacrylate analogs can be employed either in place of, or in addition to, the acrylate monomers and/or acrylate oligomers described herein. Reaction rates of methacrylates are typically ~2 orders of magnitude slower than their acrylate counterparts. However, they can offer improved properties, such as a cured image having improved adhesion and/or flexibility.

The monomer and/or oligomer can be present in any suitable amount. In embodiments, the monomer, oligomer, or combination thereof is added in an amount of from about 10 to about 85%, or from about 30 to about 80%, or from about 50 to about 70%, by weight based on the total weight of the curable ink composition.

In an embodiment, the compositions of the present disclosure comprise at least one acrylate monomer and at least one acrylate oligomer. Any of the above acrylate monomers and oligomers can be employed. As an example, the acrylate monomer can be a propoxylated trimethylolpropane triacrylate monomer and the acrylate oligomer can be a tetrafunctional polyester acrylate oligomer.

In some embodiments, co-reactive monomers may be added either in addition to, or in place of, the acrylate monomers discussed above. The co-reactive monomers are added to control polarity of the ink vehicle. Specific examples of such co-reactive monomers include, but are not limited to, the functional water soluble aromatic urethane acrylate compound (available from CYTEC as EBECRYL 2003), the di-functional compound polyethylene glycol diacrylate (available from CYTEC as EBECRYL 11), and the tri-functional compound polyether triacrylate (available from CYTEC as EBECRYL 12).

## Polyols

The white ink compositions of the present disclosure can include at least one polyol adhesive resin. Any suitable polyol that functions as an adhesive, is compatible with the white ink composition and that is solid at 25°C or more, can be employed. In an example, the polyol adhesive resin has a $T_g$ in excess of 75°C, such as a $T_g$ of about 80°C to about 150°C, or about 85°C to about 120°C, or about 85°C to about 100°C. In particular, the polyol can impart adhesion of the white ink to certain polymer substrates, such as substrates comprising one or more of biaxially-oriented polyethylene terephthalate (commercially available as MYLAR ®), biaxially-oriented polypropylene ("BOPP"), polyethylene and other polymers.

A commercially available polyol adhesive resin that is solid at 25°C is VARIPLUS SK, available from Evonik Industries of Essen, Germany. This commercially available polyol has a glass transition temperature of -90 C°, a hydroxyl value of -325 mg KOH/g and a density of -1.15 g/cm$^3$. The polyol adhesives of the present disclosure are distinguished from copolyols that are known to adjust or enhance surface wetting properties of inks, such as Dimethicone Copolyols. In an example, the compositions of the present disclosure do not include a polyol surfactant, such as Dimethicone Copolyol.

The amount of the polyol adhesive resin in the ink compositions can be any amount suitable for white inks. As discussed above, white inks often employ a higher percentage of pigment than colored inks, which can make incorporating additional solids while maintaining ink stability over time difficult. This is especially true considering the typically high viscosities of DALI inks, which high viscosities allow the inks to be effective for printing images and to allow the substantial transfer of the inks to the receiving substrate from the blanket in DALI printing processes. The levels of $TiO_2$ pigment in a DALI ink that result in a balance of both the desired ink stability and opacity are, for example, about 40% $TiO_2$ pigment or greater, such as about 45 wt% $TiO_2$ pigment or greater, such as about 50 wt% $TiO_2$ pigment or greater. Some solid polyols, including VariPlus SK, have a $T_g$ in excess of about 80 °C, which make the solubilization of the polyol into the DALI ink monomer and oligomer carrier components at room temperature (about 23°C for purposes of this application) difficult given the already high solids content. However, Applicants have determined that incorporating additional solids, in the form of solid polyols, in effective amounts is achievable with these compositions and processes at room temperature. The ability to obtain a stable composition at relatively low temperatures, such as about room temperature, is desirable because excessive heating of the radiation curable components, including acrylate monomers and oligomers, while aiding in the melt solubilization of some polyols, including VariPlus SK, that have a $T_g$ in excess of about 80 °C, can lead to undesired thermally induced or chemically initiated radical type polymerization reactions. Furthermore, an excess of a polyol that is a solid at room temperature can also potentially interfere with the desired rheology and flowing characteristics of the ink as it occurs in the DALI printing process, including the ink dosing and acceptance into the Anilox roller from an ink loader where the ink resides. The inks of the present disclosure are stable and show promising rheology and flow characteristics.

Example polyol adhesive resin concentrations for the white inks of the present disclosure can range from about 2% to about 20% by weight, or about 5% to about 15% by weight, or about 5% to about 10% by weight, relative to the total weight of the ink composition.

**Photoinitiators**

Any suitable photoinitiator that is compatible with the white ink composition and that is suitable for polymerizing the particular oligomers and monomers being employed in the ink vehicle can be used. Photoinitiators can allow the inks to be radiation curable using a suitable radiation source, such as, for example, light in the ultraviolet spectrum. In an embodiment the photoinitiators are free-radical photoinitiators. Example photoinitiators include 2-dimethylamino-2-(4-methyl-benzyl)-1-(4-morpholino-4-yl-phenyl)=butan-1-one; 1-hydroxy-cyclohexyl-phenyl-ketone; bis(2,4,6-trimethylbenzoyl)-phenylphosphine oxide; ethyl (2,4,6-trimethylbenzoyl) phenylphosphinate (TPO-L); 2,4,6-trimethylbenzoyl-diphenyl-phosphine oxide (TPO); and oligomeric alpha hydroxyketones, such as oligo[2-hydroxy-2-methyl-1-[4-(1-methylvinyl)phenyl]propanone].

Examples of such photoinitiators are commercially available as IRGACURE 379, IRGACURE 184 and IRGACURE 819, all available from Ciba Specialty Chemicals. IRGACURE 379 is 2-dimethylamino-2-(4-methyl-benzyl)-1-(4-morpholino-4-yl-phenyl)butan-1-one, with a molecular weight of 380.5. IRGACURE 184 is 1-hydroxy-cyclohexyl-phenyl-ketone, having a molecular weight of 204.3. IRGACURE 819 is bis(2,4,6-trimethylbenzoyl)-phenylphosphine oxide, having a molecular weight of 418.5. An example of a commercially available oligomeric alpha hydroxyketone photoinitiator is Esacure KIP 150, available from Lamberti Technologies, which is oligo[2-hydroxy-2-methyl-1-[4-(1-methylvinyl)phenyl]propanone]. An example of a commercially available 2,4,6-trimethylbenzoyl-diphenyl-phosphine oxide is OMNIRAD™ TPO available from IGM Resins of Charlotte, North Carolina.

The photoinitiators can be chosen for use at a particular wavelength to be used for curing. For example, TPO photoinitiators work well at 395 nm. Any suitable range of wavelengths that can be emitted at a sufficient intensity so as to cure the ink can be employed. For example, wavelengths ranging from about 300 nm to about 450 nm, such as about 365 nm to about 405 nm, can be employed for curing, as can wavelengths outside of this range.

In an embodiment, a plurality of different photoinitiators, such as two, three or more photoinitiators, can be employed in a single ink composition. For example, two, three or four of any of the above described photoinitiators can be employed. As examples, mixtures of commercially available photoinitiators can be used that are suitable for the white ink composition. A specific example is Omnirad 2100, which is a blend of Omnirad 819 and Omnirad TPO-L. Another suitable mixture of photoinitiators is Omnirad BL 724, which comprises a mixture of: 2-hydroxy-2-methylpropiophenone; 2,3-dihydro-6-(2-hydroxy-2- methyl-1-oxopropyl)-1,1,3-trimethyl-3-[4-(2-hydroxy2-methyl- 1-oxopropyl)phenyl]-1H-indene; 2,3-dihydro-5-(2-hydroxy-2-methyl-1-oxopropyl)-1,1,3-trimethyl-3-[4-(2-hydroxy2-methyl- 1-oxopropyl)phenyl]-1H-indene; Ethyl phenyl(2,4,6-trimethylbenzoyl)phosphinate; 2,2-dimethoxy-1,2-diphenylethan-1-one; 3-hydroxy-3-phenylbutan-2-one (isomer) and Diphenyl(2,4,6-trimethylbenzoyl)phosphine oxide, and which is commercially available from IGM Resins, B.V.

The total of all photoinitiator(s) may be present in an amount of from 1 to about 10 weight % of the ink composition, such as about 3 to about 8 weight %, or about 5 to about 7 weight %.

The particular photoinitiators employed can affect the color of the white ink. For example, many photoinitiators can cause unwanted coloration of the ink if used in too great an amount (e.g., the ink can turn a yellow color). As an example, employing all four of IRGACURE 379, IRGACURE 819, IRGACURE 184 AND ESACURE KIP 150 in the amounts shown in Table 3 allowed for a white ink to be formed, while using too much of any one of those four may cause unwanted discoloration (e.g., yellowing). Further, it can be advantageous to choose a variety of photoinitiators to allow light absorption over a broader absorption range. Therefore, using multiple photoinitiators can provide advantages in white ink systems.

**Colorants**

In an embodiment, the colorant employed in the white inks of the present disclosure is chosen from one or more dyes, one or more pigments or mixtures of dyes and pigments. Any suitable dyes or pigment that provide the desired white coloration may be chosen, provided that they are capable of being dispersed or dissolved in the ink composition and are compatible with the other ink components. In an embodiment, pigments are employed. In certain embodiments, the colorant herein comprises one or more white pigments of varying degree of opacity including, for example, titanium dioxide pigments, lithopone pigments (for example, C.I. Pigment White 5), zinc oxide whites, which may or may not themselves be slightly colored, and other inorganic white pigments. In embodiments, the pigment herein is selected from the group consisting of titanium dioxide pigments, lithopone pigments, zinc oxide pigments, and combinations thereof.

In embodiments, the ink composition herein comprises a white pigment as a main colorant and, optionally, one or more additional pigments. In embodiments, the ink composition is a background ink, meaning an ink that when printed provides an ink layer, in embodiments a white ink layer, wherein an image can be printed on top of the white ink layer. In embodiments, the white ink background layer can be "opaque" (that is, the substrate does not show through) or "transparent" (that is, the substrate shows through the print layer). The opacity can be achieved by modifying the pigment loading in the ink or by printing several layers on top of each other. To achieve transparency, less pigment can be loaded in the ink or the ink rheology can be selected such as to allow a thinner layer on the substrate. In embodiments, the ink composition can contain two or more colorants comprising a selected ratio of high to low opacity colorants, in embodiments, a selected ratio of high to low opacity pigments.

In embodiments, one or more low opacity pigments can be selected. The low opacity pigment can be white or non-white. In embodiments, a non-white low opacity pigment can be combined with one or more additional colorants to provide a white ink composition (that is, an ink composition that prints a white image or layer).

In embodiments, the low opacity pigment is selected from the group consisting of brilliant white pigment Lithopone B301, Cobalt green, sometimes known as Rinman's green or Zinc Green, a translucent green pigment, and combinations thereof.

In embodiments, the high opacity pigment is selected from the group consisting of titanium dioxide pigments, natural titanium dioxide pigments, synthesized titanium dioxide pigments, and combinations thereof. Synthesized titanium dioxide pigments, such as rutile titanium dioxide pigments, can be produced by, for example, the sulfate process or the chloride process. Titanium dioxide pigments can be surface modified or treated with one or more of: alumina and other aluminum products; synthetic amorphous silica and other silicon products; zirconium products and also further include an organic treatment (and/or other treatments) to aid in the dispersability, stability and other performance metrics including rheology, optical properties, weather and light fastness in various end use applications such as paints, coatings, inks and the like. Examples of suitable titanium dioxide pigments include TI-PURE® R706 and TI-PURE 6300, both of which are available from the Chemours Company TT, LLC, as well as KRONOS 2064 and KRONOS 2066 titanium dioxide pigments, available from Kronos International, Inc.

The amount of pigments employed can be any amount suitable for white inks. As discussed above, white inks often employ a higher percentage of pigment than colored inks. Example pigment loadings for the white inks of the present disclosure at 23°C can range from about 40% to about 65% by weight, or about 40% to about 60% by weight, or about 45% to about 55% by weight, relative to the total weight of the ink composition.

The total non-curable solids loading, which can include the pigment, the polyol adhesive resin and any optional non-curable solids, such as fillers (e.g., clay or silica fillers) can range from about 45% by weight to about 70% by weight, such as about 50% by weight to about 65% by weight at room temperature (about 23°C). These solids ranges have been selected such that the resulting rheology and tack of the ink enable the desired inking onto the Anilox roller and the substantial transfer of ink from the Anilox roller to a receiving blanket and then to a receiving substrate to allow a printed image; and once the printed image ink is radiation cured, the desired opacity and adhesion characteristics of the printed image can be realized.

## Optional Ingredients

The ink compositions of the present disclosure can include one or more optional additional ingredients. Examples of such optional ingredients include thermal stabilizers, in-can stabilizers, viscosity modifiers, fillers and dispersants.

An exemplary thermal stabilizer is Sartomer CN3216, which is an acrylate stabilizing additive having a specific gravity of 1.113 at 25°C and a viscosity of 1,100 cP at 25°C. Other examples of stabilizers include sterically hindered nitroxyl radicals, such as those disclosed in US Patent Publication No. 2003/073762 or EP Patent Publication 1235863, the disclosure of both of which are hereby incorporated by reference in their entirety. Examples of typical radical scavengers that prevent the gelation of UV curable compositions while having minimal impact on curing speed are bis(1-oxy-2,2,6,6-tetramethylpiperidin-4-yl)sebacate (Irgastab® UV 10) and 4-hydroxy-1-oxy-2,2,6,6-tetramethylpiperidine. Still another stabilizer composition includes a stabilizer blend of a sterically hindered nitroxyl radical and a quinone methide, as disclosed in US Patent No. 7,723,398, the disclosure of which is hereby incorporated by reference in its entirety.

One or a plurality of different thermal stabilizers can be used. The thermal stabilizer(s) may be present in any suitable amount. Example amounts include from about 0.1 to about 5 weight % of the ink composition, such as about 0.2 to about 3 weight % or about 0.4 to about 1 weight %.

Any suitable in-can stabilizers can be employed. The in-can stabilizer functions to reduce the level of free-radicals, thereby potentially avoiding unwanted polymerization in the composition during storage. An example of a commercially available in-can stabilizer is Genorad 16, available from Rahn AG of Zurich, Switzerland.

Any filler that is suitable for adjusting the viscosity of the ink composition and is otherwise compatible with the printing process can optionally be employed. Exemplary fillers include organic and inorganic clay and silica. Commercially available examples of such fillers are CLAYTONE HY, an organo clay available from Southern Clay Products, and silica-type materials such as AEROSIL 200 from Degussa. One or more different fillers can be used. For example, either clay or silica alone, or a combination of both, can be employed.

The total filler may be present in an amount of from about 0 to about 6 weight % of the ink composition, such as about 0.2 to about 4 weight %, or about 1 to about 2 weight %, based on the total weight of the ink composition.

The optional dispersant components may include any suitable or desired dispersant including, but not limited to AB-diblock copolymers of high molecular weight such as EFKA® 4340 available from BASF SE, and DISPERBYK® 2100 available from Byk-Chemie GmbH, or a mixture thereof. In a specific embodiment, the dispersant mixture comprises a cyclohexane dimethanol diacrylate (such as CD406® available from Sartomer USA, LLC) and at least one additional component, such as EFKA® 4340, which is a high molecular weight dispersing agent having an AB-diblock copolymer structure available from BASF SE. In an exemplary embodiment, the dispersant is a polymeric dispersant, such as SOLSPERSE® 39000, commercially available from The Lubrizol Corporation. Another commercially available dispersant includes K-SPERSE A504, available from King Industries of Norfolk, Connecticut.

The dispersant may be added in any suitable amount, such as, for example, from about 1% to about 20% by weight, or about 2% to about 10% by weight, or about 3% to about 8% by weight, based on the weight of the composition. The amount of dispersant may vary depending on the amount of pigment used.

Any other ingredients suitable for use in DALI inks can also optionally be included in the compositions of the present disclosure. One of ordinary skill in the art would readily be able to determine other ingredients that can be employed.

Any of the optional ingredients discussed herein can be excluded from the compositions. In an example, one or more of the fillers or thermal stabilizers are excluded from the compositions.

The ink of the present disclosure has a complex viscosity ranging from about 300 Pa.s to about 900 Pa.s, such as about 350 Pa.s to about 700 Pa.s, or about 400 Pa.s to about 620 Pa.s, where the complex viscosity is measured at 25°C, at an angular frequency of 100 rad/s with a constant applied % oscillation strain that can be from about 0.5% to about 5%. The complex viscosities of inks were assessed on a DHR-2 rheometer (TA Instruments), equipped with a 25 mm parallel plate at 25°C and 500 micron gap. Frequency sweeps with semi-decade-based data were generated from 0.1 to 100 rad/s. Because the ink has a relatively high viscosity, strain sweeps were run before the frequency sweeps to determine the % oscillation strain to be employed during the frequency sweeps. For highly viscous DALI inks, it is preferred that a dynamic oscillation strain test be applied to the sample before the frequency sweep test to ensure that the frequency sweep test is performed in a manner so that complex viscosity is determined at or near the ink's linear viscoelasticity upper limit. For a parallel plate configuration in a rheometer, applied (or measured) strain (deformation of the sample) is the unitless relationship between the radius of the plate and sample being tested, r, divided by the thickness of the sample, h, multiplied by the deflection of one of the moving plates relative to the sample, $\theta$ (in radians), as below. Applied % oscillation strain is the applied strain * 100% (e.g. 0.01 strain = 1% strain).

$$Strain = \frac{r}{h} * \theta$$

The linear viscoelasticity upper limits of inks were assessed by dynamic strain sweep tests on a DHR-2 rheometer (TA Instruments), equipped with a 25 mm parallel plate at 25°C and 500 micron gap. After the ink had been equilibrated at 25°C for 5 minutes, a dynamic oscillation strain sweep at an angular frequency of 10 rad/s was applied to the sample with semi-decade-based rheological data being generated from 0.1 to 100% oscillation strain. The % oscillation strain to be used for the ensuing frequency sweep test was determined at the point at which the storage modulus (G') plateau limit of the ink occurred, the % oscillation selected such that the storage modulus of the ink at a particular oscillation strain was within 5% of the mean value of the storage moduli of the ink determined from the 5 previous consecutive, lower oscillation strains applied to the ink. The % oscillation strain determined for the ink was then applied and held constant for the subsequent dynamic frequency sweep test used to assess the complex viscosity of the ink for which the same ink sample was used but was first rested for 15 minutes at 25 °C.

In an embodiment, after curing with UV LED radiation the inks of the present disclosure can yield tack-free or substantially tack free prints. For example, the mean tack (over a 10 minute measurement time) can range from about 55 g-m to about 70 g-m at 32°C after curing with UV LED. Curing can be accomplished with, for example, a 395 nm LED lamp that provides about 1 W/cm$^2$ intensity and 35 mJ/cm$^2$ energy dose (as measured with a UV Power Puck® II from EIT using the UV-A2 channel), which can yield prints that are immediately tack-free to the touch. It is noted that the tack of the ink is the measure of the ink cohesion before cure, which is different than the tackiness or tack of the print, which is measured after curing has occurred.

The ink compositions of the present disclosure can be prepared by any desired or suitable method. Methods for combining the ingredients described herein to form ink compositions would be readily apparent to one of ordinary skill in the art.

**Method of Printing**

The present disclosure is also directed to a printing method. The method is carried out on a system for variable lithography that employs the ink compositions described herein.

As shown in FIG. 1, an exemplary system 100 may include an imaging member 110. The imaging member 110 in the embodiment shown in FIG. 1 is a drum, but this exemplary depiction should not be interpreted so as to exclude embodiments wherein the imaging member 110 includes a plate, belt, or other known or later developed configuration. The imaging member has a reimageable surface that may be formed of materials that provide the desired properties for forming and releasing an ink image. Example materials include silicones such as polydimethylsiloxane (PDMS), fluorosilicones, and/or fluoropolymer elastomers such as VITON®. Other suitable materials may also be employed. In an embodiment, the reimageable surface may be formed of a relatively thin layer over a mounting layer, a thickness of the relatively thin layer being selected to balance printing or marking performance, durability and manufacturability.

The imaging member 110 is used to apply an ink image to an image receiving media substrate 114 at a transfer nip 112. The transfer nip 112 is formed by an impression roller 118, as part of an image transfer mechanism 160, exerting pressure in the direction of the imaging member 110. Image receiving medium substrate 114 can be any suitable medium onto which an ink image can be transferred, including, for example, paper, polymer (e.g., plastic), metal or composite sheet film. For example, a suitable polymer substrate can comprise polymer materials such as biaxially-oriented polyethylene terephthalate (commercially available as MYLAR ®), biaxially-oriented polypropylene ("BOPP"), polyethylene and other polymers. The polymer substrate can be transparent, translucent or opaque, depending on the materials employed in the substrate. In an embodiment, the image receiving medium substrate 114 comprises a transparent polymer, such as a biaxially-oriented polyethylene terephthalate, biaxially-oriented polypropylene ("BOPP"), polyethylene or a mixture thereof. The exemplary system 100 may be used for producing images on a wide variety of image receiving media substrates.

The exemplary system 100 includes a dampening fluid system 120 generally comprising a series of rollers, which may be considered as dampening rollers or a dampening unit, for uniformly wetting the reimageable surface of the imaging member 110 with dampening fluid. A purpose of the dampening fluid system 120 is to deliver a layer of dampening fluid, generally having a uniform and controlled thickness, to the reimageable surface of the imaging member 110. Suitable dampening fluids are well known in the art and may comprise mainly water optionally with small amounts of isopropyl alcohol or ethanol added to reduce surface tension as well as to lower evaporation energy necessary to support subsequent laser patterning, as will be described in greater detail below. Small amounts of certain surfactants may optionally be added to the dampening fluid as well. Alternatively, other suitable dampening fluids may be used to enhance the performance of ink based digital lithography systems. Exemplary dampening fluids include water, NOVEC® 7600 (1,1,1,2,3,3-Hexafluoro-4-(1,1,2,3,3,3-hexafluoropropoxy)pentane and has CAS#870778-34-0.), and D4 (octamethylcyclotetrasiloxane).

Once the dampening fluid is metered onto the reimageable surface of the imaging member 110, a thickness of the dampening fluid may be measured using a sensor 125. Sensor 125 may provide feedback to control the metering of the dampening fluid onto the reimageable surface of the imaging member 110 by the dampening fluid system 120.

After dampening fluid is applied to the reimageable surface of the imaging member 110, an optical patterning subsystem 130 may be used to selectively form a latent image in the uniform dampening fluid layer. Any patterning techniques suitable for imaging the dampening fluid layer may be employed. One suitable example patterning process employs a laser to image the dampening fluid. The mechanics at work in the patterning process undertaken by the optical patterning subsystem 130 of the exemplary system 100 are known to those in the art. Briefly, the application of optical patterning energy from the optical patterning subsystem 130 results in selective removal of portions of the layer of dampening fluid to form hydrophobic non-image areas and hydrophilic image areas.

Following patterning of the dampening fluid layer on image member 110 by the optical patterning subsystem 130, the patterned layer is presented to an inker subsystem 140. The inker subsystem 140 is used to apply a uniform layer of ink, such as any of the inks of the present disclosure, over the layer of patterned dampening fluid. The inker unit 140 further comprises heated ink baths whose temperatures are regulated by a temperature control module (not shown). The inker subsystem 140 may use an anilox roller to meter the offset lithographic inks of the present disclosure onto one or more ink forming rollers that are in contact with the reimageable surface layer of the imaging member 110. Separately, the inker subsystem 140 may include other traditional elements such as a series of metering rollers to provide a precise feed rate of ink to the reimageable surface. The inker subsystem 140 may deposit the ink to the imaged portions of the reimageable surface from which the dampening fluid has been removed (sometimes referred to herein as "pockets"), while ink will not adhere to portions of the reimageable surface on which dampening fluid remains.

The cohesiveness and viscosity of the ink residing on the reimageable surface of the imaging member 110 can then be modified by cooling of the ink. The cooling can be accomplished by any suitable means, such as by employing one or more physical cooling mechanisms and/or via chemical cooling. An example of cooling by physical means includes convective cooling by blowing cool air over the reimageable surface, such as from one or more jets 180 after the ink composition has been applied to imaging member 110 but before the ink composition is transferred to the final substrate 114. Alternatively or in addition to cooling the ink by convection, the surface of the imaging member 110 can be directly cooled so as to maintain the reimageable surface at a desired temperature (e.g., 10 to 30°C) so as to cool the ink by thermal conduction. Any other suitable means can be employed for cooling the ink.

In addition to cooling the ink, any other suitable means can be employed to modify the cohesiveness and viscosity of the ink residing on the reimageable surface of the imaging member 110. For example, curing mechanisms can be employed and may include optical or photo curing, heat curing, drying, or various forms of chemical curing. One such optional mechanism may involve the use of a rheology (complex viscoelastic modulus) control subsystem 150. The rheology control system 150 may form a partial crosslinking core of the ink on the reimageable surface to, for example, increase ink cohesive strength relative to the reimageable surface layer.

After cooling, the ink is transferred from the reimageable surface of the imaging member 110 to an image receiving medium substrate 114 using a transfer subsystem 160. The transfer occurs as the substrate 114 is passed through a nip 112 between the imaging member 110 and an impression roller 118 such that the ink within the pockets of the reimageable surface of the imaging member 110 is brought into physical contact with the substrate 114. The adhesion of the ink may be modified as the viscosity of the ink changes, such as during cooling of the ink or the partial UV curing using rheology control system 150. The modified adhesion of the ink causes the ink to adhere to the substrate 114 and to separate from the reimageable surface of the imaging member 110.

After transfer of the ink image to the substrate 114, an optional final cure can be performed. The final cure of the ink image on substrate 114 can be accomplished by any suitable method, such as by exposure of the ink image to ultraviolet light and/or heat.

In certain offset lithographic systems, an offset roller, not shown in FIG. 1, may first receive the ink image pattern from the imaging member 110 and then transfer the ink image pattern to the substrate 114, according to a indirect transfer method. Such offset rollers and indirect transfer techniques are well known in the art.

Following the transfer of the majority of the ink to the substrate 114, any residual ink and/or residual dampening fluid may be removed from the reimageable surface of the imaging member 110, preferably without scraping or significantly wearing that surface. An air knife (not shown) may be employed to remove residual dampening fluid. It is anticipated, however, that some amount of ink residue may remain. Removal of such remaining ink residue may be accomplished through use of some form of cleaning subsystem 170. In an embodiment, the cleaning subsystem 170 comprises at least a first cleaning member such as a sticky or tacky member in physical contact with the reimageable surface of the imaging member 110, the sticky or tacky member removing residual ink and any remaining small amounts of surfactant compounds from the dampening fluid of the reimageable surface of the imaging member 110. The sticky or tacky member may then be brought into contact with a smooth roller to which residual ink may be transferred from the sticky or tacky member, the ink being subsequently stripped from the smooth roller by, for example, and a doctor blade.

Any other suitable mechanisms can be employed by which cleaning of the reimageable surface of the imaging member 110 may be facilitated. Cleaning of the residual ink and dampening fluid from the reimageable surface of the imaging member 110 can reduce or prevent the formation of ghost images (also known as "ghosting") in the proposed system. Once cleaned, the reimageable surface of the imaging member 110 is again presented to the dampening fluid system 120 by which a fresh layer of dampening fluid is supplied to the reimageable surface of the imaging member 110, and the process is repeated.

Careful control of the temperature and pressure conditions at the transfer nip 112 can aid in transfer of the ink image. As an example, transfer efficiencies for the ink from the reimageable surface of the imaging member 110 to the substrate 114 (which substrate can comprise a transparent polymer or any of the other substrate materials described herein) can be 90% by weight or more of the ink image, such as 95% by weight or more, such as 98% by weight or more, such as at or near 100%.

**EXAMPLES**

Table 1: Summary of Certain Ink Components included in examples.

| Material | Vendor | Description |
|---|---|---|
| Ti-Pure™ pigment | Chemours Company | C.I. Pigment White 8 |
| KRONOS® pigment | Kronos Worldwide, Inc | C.I. Pigment White 8 |
| K-SPERSE® A504 | King Industries | 100% active polymeric dispersant |
| SR-501 | Sartomer/Arkema | six-mole propoxylated trimethylolpropane triacrylate, CAS No. 53879-54-2 |

(continued)

| Material | Vendor | Description |
|---|---|---|
| CN2282 | Sartomer/Arkema | tetrafunctional polyester acrylate oligomer |
| CN118 | Sartomer/Arkema | acid modified epoxy diacrylate |
| VariPlus SK | Evonik Industries | Hard polyol resin, solid at room temperature |
| Polyester Acrylate SP 283 | Soltech Ltd. | Amino-modified multi-functional polyester acrylate oligomer |
| Omnirad TPO | IGM Resins, B.V. | 2, 4, 6-trimethylbenzoyl-diphenyl-phosphine oxide, CAS No. 75980-60-8 |
| Additol LX | Allnex | Liquid-based photoinitiator mixture for clear and white coatings and prints |
| Genorad™ 16 | Rahn Corporation | In-can stabilizer |

The materials used in the inks of the invention in Table 1 are illustrative examples and not meant to be limiting to the spirit and scope of the invention.

The K-sperse A504 loading onto pigment was fixed at about 10.8 %AOP (additive on pigment by percentage weight) but inks having similar formulations and having a very similar range of rheological, tack and curing properties could be realized with other suitable dispersants and with other %AOP levels.

## EXAMPLES 1 TO 10

Table 2A -Compositions of the Example Inks (component amounts shown in wt%)

| Component | Example 1 | Example 2 | Example 3 | Example 4 | Example 5 | Example 6 | Example 7 | Example 8 | Example 9 | Example 10 |
|---|---|---|---|---|---|---|---|---|---|---|
| TiPure pigment | 52.5 | 50 | 55 | 45 | 55 | 45 | 50 | 45 | 50 | 55 |
| K-sperse A-504 | 5.69 | 5.42 | 5.96 | 4.88 | 5.96 | 4.88 | 5.42 | 4.88 | 5.42 | 5.96 |
| Sartomer SR-501 | 10 | 10 | 10 | 10 | 7.5 | 7.5 | 7.5 | 12.5 | 12.5 | 12.5 |
| Sartomer CN2282 | 5.1 | 7.38 | 5.67 | 9.09 | 7.19 | 10.60 | 8.89 | 7.57 | 5.86 | 4.15 |
| Sartomer CN118 | 13.12 | 13.12 | 10.08 | 16.16 | 12.78 | 18.86 | 15.82 | 13.46 | 10.42 | 7.38 |
| VariPlus SK | 8 | 8 | 8 | 8 | 6 | 6 | 6 | 10 | 10 | 10 |
| Omnirad TPO | 3.5 | 5.08 | 4.29 | 5.87 | 4.58 | 6.16 | 5.37 | 5.59 | 4.80 | 4.01 |
| Additol LX | 1.09 | - | - | - | - | - | - | - | - | - |
| Genorad 16 | 1 | 1 | 1 | 1 | 1 | 1 | 1 | 1 | 1 | 1 |
| Total | 100.00 | 100.00 | 100.00 | 100.00 | 100.00 | 100.00 | 100.00 | 100.00 | 100.00 | 100.0 0 |

## Example 1

In a 1000 mL stainless steel jacketed vessel equipped with quick disconnect lines to a Julabo circulating bath with active cooling were added 20.40 g CN2282 from Sartomer Corporation, 52.48 g CN118 from Sartomer Corporation, 40.00 g SR501 from Sartomer Corporation, 22.76 g K-sperse A504 from King Industries and 4.00 g Genorad 16 from Rahn Corporation. The vessel was placed in a HCPS 1/16 mill unit, available from the Hockmeyer Equipment Corporation, equipped with a 4 inch wide anchor impeller. The vessel was heated to 80 °C with initially no stirring then with stirring at 100 RPM as the temperature of the ink base components passed 80 °C to a temperature of about 93 °C upon which it was mixed for about 60 minutes. Once the ink components were homogeneous and free of air, into the vessel were added 14.00 g Omnirad TPO from IGM Resins and 4.36 g Additol LX from Allnex Corporation while mixing at 100 RPM. The temperature of the mixture was maintained for 93 °C while mixing for 45 minutes where the first UV ink base solution appeared homogeneous and free of air. At this time, 32.00 g VariPlus SK from Evonik Industries, which was pre-ground to a fine powder, was added slowly to the vessel while the components were mixed with the anchor impeller at 100 RPM. Once the VariPlus SK was added, stirring of the vessel contents was continued for 1 hour to reveal the second UV ink base solution appearing homogeneous and free of air. At this time, 210 g of a C.I. Pigment White 8 $TiO_2$ pigment from Chemours Company, were added slowly to the vessel with the mixture allowed to stir for an hour to form COMPONENT MIXTURE 1A. The anchor impeller was replaced with a 40 mm diameter high shear Cowles blade which was then stirred at 5000 RPM for about an hour to form COMPONENT MIXTURE 1B. The thoroughly mixed component mixture was then qualitatively transferred to a TRIAS 300 3-roll mill apparatus, manufactured by Buhler, where COMPONENT MIXTURE 1B was passed through the 3-roll mill first at an input apron roll speed of 300 RPM with a roll separating force of of 50 and 50 N/mm for rollers 1-2 and 2-3 at 35 °C inner roll temperature to form COMPONENT MIXTURE 1C which was collected in a 250 mL glass amber bottle.

**Example 2**

An ink, whose composition is outlined in Table 2A, was prepared in the same manner as Example 1 at a 400 gram batch size except Additol LX was not used. During the course of the ink making, various UV ink bases and inks from different processes were made: COMPONENT MIXTURE 2A was formed at the end of the low shear mixing with the anchor impeller; COMPONENT MIXTURE 2B was formed at the end of the low shear mixing with the high shear mixing Cowles blade; and COMPONENT MIXTURE 2C was formed at the end of the 3-roll milling process which was collected in a 250 mL glass amber bottle.

**Example 3**

An ink, whose composition is outlined in Table 2A, was prepared in the same manner as Example 2 at 400 gram batch size. During the course of the ink making, various UV ink bases and inks from different processes were made: COMPONENT MIXTURE 3A was formed at the end of the low shear mixing with the anchor impeller; COMPONENT MIXTURE 3B was formed at the end of the low shear mixing with the high shear mixing Cowles blade; and COMPONENT MIXTURE 3C was formed at the end of the 3-roll milling process which was collected in a 250 mL glass amber bottle.

**Example 4**

An ink, whose composition is outlined in Table 2A, was prepared in the same manner as Example 2 at 400 gram batch size. During the course of the ink making, various UV ink bases and inks from different processes were made: COMPONENT MIXTURE 4A was formed at the end of the low shear mixing with the anchor impeller; COMPONENT MIXTURE 4B was formed at the end of the low shear mixing with the high shear mixing Cowles blade; and COMPONENT MIXTURE 4C was formed at the end of the 3-roll milling process which was collected in a 250 mL glass amber bottle.

**Example 5**

An ink, whose composition is outlined in Table 2A, was prepared in the same manner as Example 2 at 400 gram batch size. During the course of the ink making, various UV ink bases and inks from different processes were made: COMPONENT MIXTURE 5A was formed at the end of the low shear mixing with the anchor impeller; COMPONENT MIXTURE 5B was formed at the end of the low shear mixing with the high shear mixing Cowles blade; and COMPONENT MIXTURE 5C was formed at the end of the 3-roll milling process which was collected in a 250 mL glass amber bottle.

**Example 6**

An ink, whose composition is outlined in Table 2A, was prepared in the same manner as Example 2 at 400 gram batch size. During the course of the ink making, various UV ink bases and inks from different processes were made: COMPONENT MIXTURE 6A was formed at the end of the low shear mixing with the anchor impeller; COMPONENT MIXTURE 6B was formed at the end of the low shear mixing with the high shear mixing Cowles blade; and COMPONENT MIXTURE 6C was formed at the end of the 3-roll milling process which was collected in a 250 mL glass amber bottle.

**Example 7**

An ink, whose composition is outlined in Table 2A, was prepared in the same manner as Example 2 at 400 gram batch size. During the course of the ink making, various UV ink bases and inks from different processes were made: COMPONENT MIXTURE 7A was formed at the end of the low shear mixing with the anchor impeller; COMPONENT MIXTURE 7B was formed at the end of the low shear mixing with the high shear mixing Cowles blade; and COMPONENT MIXTURE 7C was formed at the end of the 3-roll milling process which was collected in a 250 mL glass amber bottle.

**Example 8**

An ink, whose composition is outlined in Table 2A, was prepared in the same manner as Example 2 at 400 gram batch size. During the course of the ink making, various UV ink bases and inks from different processes were made: COMPONENT MIXTURE 8A was formed at the end of the low shear mixing with the anchor impeller; COMPONENT MIXTURE 8B was formed at the end of the low shear mixing with the high shear mixing Cowles blade; and COMPONENT MIXTURE 8C was formed at the end of the 3-roll milling process which was collected in a 250 mL glass amber bottle.

**Example 9**

An ink, whose composition is outlined in Table 2A, was prepared in the same manner as Example 2 at 400 gram batch size. During the course of the ink making, various UV ink bases and inks from different processes were made: COMPONENT MIXTURE 9A was formed at the end of the low shear mixing with the anchor impeller; COMPONENT MIXTURE 9B was formed at the end of the low shear mixing with the high shear mixing Cowles blade; and COMPONENT MIXTURE 9C was formed at the end of the 3-roll milling process which was collected in a 250 mL glass amber bottle.

**Example 10**

An ink, whose composition is outlined in Table 2A, was prepared in the same manner as Example 2 at 400 gram batch size. During the course of the ink making, various UV ink bases and inks from different processes were made: COMPONENT MIXTURE 10A was formed at the end of the low shear mixing with the anchor impeller; COMPONENT MIXTURE 10B was formed at the end of the low shear mixing with the high shear mixing Cowles blade; and COMPONENT MIXTURE 10C was formed at the end of the 3-roll milling process which was collected in a 250 mL glass amber bottle.

**EXAMPLES 11 TO 16**

Table 2B -Compositions 11 to 16 of the Example Inks (component amounts shown in wt%)

| Component | Example 11 | Example 12 | Example 13 | Example 14 | Example 15 | Example 16 |
|---|---|---|---|---|---|---|
| Ti-Pure R-706 | - | - | 54.35 | 54.35 | 54.35 | 54.35 |
| KRONOS 2066 | 55 | - | - | - | - | - |
| KRONOS 2064 | - | 55 | - | - | - | - |
| K-sperse A-504 | 5.96 | 5.96 | 5.89 | 5.84 | 5.84 | 5.89 |
| Sartomer SR-501 | 12.5 | 12.5 | - | - | - | - |
| Sartomer CN2282 | 4.15 | 4.15 | 6.88 | 6.81 | 6.81 | 6.88 |
| Sartomer CN118 | 7.38 | 7.38 | 21.95 | 16.86 | 13.91 | 21.95 |
| VariPlus SK | 10 | 10 | - | 2.66 | 3.11 | - |
| Soltech SP283 | - | - | 5 | 7.5 | 10 | 5 |
| Omnirad TPO | 4.01 | 4.01 | 4.94 | 4.97 | 4.97 | 4.94 |
| Additol LX | - | - | - | - | - | - |

(continued)

| Component | Example 11 | Example 12 | Example 13 | Example 14 | Example 15 | Example 16 |
|---|---|---|---|---|---|---|
| Genorad 16 | 1 | 1 | 0.99 | 1.01 | 1.01 | 0.99 |
| Total | 100 | 100 | 100 | 100 | 100 | 100 |

**Example 11**

An ink, whose composition is outlined in Table 2B, was prepared in the same manner as Example 10 at 400 gram batch size, except that KRONOS 2066 was used instead of Ti Pure Pigment. During the course of the ink making, various UV ink bases and inks from different processes were made: COMPONENT MIXTURE 11A was formed at the end of the low shear mixing with the anchor impeller; COMPONENT MIXTURE 11B was formed at the end of the low shear mixing with the high shear mixing Cowles blade; and COMPONENT MIXTURE 11C was formed at the end of the 3-roll milling process which was collected in a 250 mL glass amber bottle.

**Example 12**

An ink, whose composition is outlined in Table 2B, was prepared in the same manner as Example 10 at 400 gram batch size, except that KRONOS 2064 was used instead of TI Pure Pigment. During the course of the ink making, various UV ink bases and inks from different processes were made: COMPONENT MIXTURE 12A was formed at the end of the low shear mixing with the anchor impeller; COMPONENT MIXTURE 12B was formed at the end of the low shear mixing with the high shear mixing Cowles blade; and COMPONENT MIXTURE 12C was formed at the end of the 3-roll milling process which was collected in a 250 mL glass amber bottle.

**Example 13**

An ink, whose composition is outlined in Table 2B, was prepared in the same manner as Example 2 at 400 gram batch size, except that the ink comprised 5 wt% Polyester acrylate SP 283, and no Variplus SK or SR-501 monomer were added. During the course of the ink making, various UV ink bases and inks from different processes were made: COMPONENT MIXTURE 13A was formed at the end of the low shear mixing with the anchor impeller; COMPONENT MIXTURE 13B was formed at the end of the low shear mixing with the high shear mixing Cowles blade; and COMPONENT MIXTURE 13C was formed at the end of the 3-roll milling process which was collected in a 250 mL glass amber bottle.

**Example 14**

An ink, whose composition is outlined in Table 2B, was prepared in the same manner as Example 2 at 400 gram batch size, except that the ink comprised 7.5 wt% Polyester acrylate SP 283, 2.66 wt% Variplus SK and no SR-501 monomer. During the course of the ink making, various UV ink bases and inks from different processes were made: COMPONENT MIXTURE 14A was formed at the end of the low shear mixing with the anchor impeller; COMPONENT MIXTURE 14B was formed at the end of the low shear mixing with the high shear mixing Cowles blade; and COMPONENT MIXTURE 14C was formed at the end of the 3-roll milling process which was collected in a 250 mL glass amber bottle.

**Example 15**

An ink, whose composition is outlined in Table 2B, was prepared in the same manner as Example 2 at 400 gram batch size, except that the ink comprised 10 wt% Polyester acrylate SP 283, 3.11 wt% of Variplus SK and no SR-501 monomer. During the course of the ink making, various UV ink bases and inks from different processes were made: COMPONENT MIXTURE 15A was formed at the end of the low shear mixing with the anchor impeller; COMPONENT MIXTURE 15B was formed at the end of the low shear mixing with the high shear mixing Cowles blade; and COMPONENT MIXTURE 15C was formed at the end of the 3-roll milling process which was collected in a 250 mL glass amber bottle.

**Example 16**

An ink, whose composition is outlined in Table 2B, was prepared in the same manner as Example 13, except that a larger 13 kg batch size was made-using a Dissolver Dispermat CN-10, available from VMA-GETZMANN GMBH, equipped with a 21 L stainless steel, jacketed vessel and a 7 inch wide anchor impeller and a 4 inch diameter Cowles blade. During the course of the ink making, various UV ink bases and inks from different processes were made: COMPONENT MIXTURE 16A was formed at the end of the low shear mixing with the anchor impeller; COMPONENT MIXTURE 16B was formed at the end of the low shear mixing with the high shear mixing Cowles blade; and COMPONENT MIXTURE 16C was formed at the end of the 3-roll milling process which was collected in a 20 L high density polyethylene pail.

**Example Ink Properties**

Among other properties (e.g., such as with resultant ink prints having good curing properties by radiation exposure, more specifically - by UV LED radiation, the wanted whiteness, color or near-color neutrality and opacity features on resultant prints, etc.), inks having tack and rheology within useful ranges are desirable features of the ink compositions described herein. Inks with too low a viscosity will invite unwanted image background issues while inks with too high a viscosity will not flow as desired through the ink loader or in and out of the anilox roller during the blanket inking stage. Inks with too low a tack (ink cohesion) will have low transfer from blanket to receiving substrate negatively impacting print quality and burdening the printing system's cleaning cycle, while inks with too high a tack will hasten blanket wear and limit blanket life, resulting in down printing time and more expense to the customer.

The complex viscosities of inks (from each of the 3-roll milled Component "C" analogs of the illustrative Examples) were assessed on a TA Instruments DHR-2 rheometer, equipped with a 25 mm parallel plate at 25 °C and 500 micron gap using the same process as described above for determining complex viscosity. Frequency sweeps with semi-decade data were generated between 0.1 and 100 rad/s.

The tack (ink cohesion) of inks (from each of the 3-roll milled Component "C" analogs of the illustrative Examples) were determined using a Thwing-Albert Inkometer 1100 such that the mean tack was determined for 1.3 mL of ink at 1200 RPM at 32 °C over a period of 10 minutes with the mean tack taken from a mean average of tack values generated every 20 seconds over the course of the measurement. It is advantageous for the inks to have a mean tack over a 10 minute measurement period of between about 45 to about 65 g-m. It is also a desired property of these inks to have good tack stability (or low differential tack) over the course of the remaining 9 minute measurement cycle after a tack after 60 seconds has been determined such that the differential tack (the difference of tack at 60 s and the tack at 600 s) is less than about 15 g-m. It is also desirable that misting or spitting of inks during printing is almost absent or otherwise judged to be low based on visual assessment of the inside cover present to shield the Inkometer's rollers during the test used to determine the ink's tack properties.

Table 3: Summary of Viscosity and Tack Properties - Examples 1-10

| Ink Property | Example 1 | Example 2 | Example 3 | Example 4 | Example 5 | Example 6 | Example 7 | Example 8 | Example 9 | Example 10 |
|---|---|---|---|---|---|---|---|---|---|---|
| Viscosity at 25 C, mPa.s | | | | | | | | | | |
| Viscosity at 1 rad/s | 1.23E+06 | 1.08E+06 | 1.39E+06 | 7.38E+05 | 1.47E+06 | 7.78E+05 | 1.03E+06 | 7.27E+05 | 9.83E+05 | 1.35E+06 |
| Viscosity at 100 rad/s | 5.57E+05 | 5.64E+05 | 6.07E+05 | 4.66E+05 | 5.38E+05 | 5.05E+05 | 5.21E+05 | 4.95E+05 | 5.44E+05 | 5.86E+05 |
| Shortness Index (unitless) | 2.22 | 1.91 | 2.29 | 1.58 | 2.72 | 1.54 | 1.98 | 1.47 | 1.80 | 2.30 |
| | | | | | | | | | | |
| Tack at 32 C, g-m | | | | | | | | | | |
| mean tack | 61.2 | 70.0 | 65.8 | 58.0 | 62.6 | 59.5 | 60.2 | 61.6 | 64.5 | 58.1 |
| 60 stack | 68.0 | 78.7 | 70.4 | 66.9 | 70.2 | 67.1 | 67.9 | 69.3 | 72.2 | 61.8 |
| differential tack (60-600 s) | 9.2 | 12.2 | 6.6 | 12.6 | 10.6 | 11.4 | 11.1 | 10.8 | 10.8 | 4.1 |
| | | | | | | | | | | |

Table 3 (Continued)

| Ink Property | Example 11 | Example 12 | Example 13 | Example 14 | Example 15 | Example 16 |
|---|---|---|---|---|---|---|
| *Viscosity at 25 °C, mPa.s* | | | | | | |
| Viscosity at 1 rad/s | 1.55E+0 6 | 1.52E+0 6 | 1.30E+0 6 | 1.70E+0 6 | 2.03E+0 6 | 7.74E+0 5 |
| Viscosity at 100 rad/s | 6.08E+0 5 | 6.20E+0 5 | 3.87E+0 5 | 4.63E+0 5 | 4.25E+0 5 | 4.00E+0 5 |
| Shortness Index | 2.55 | 2.45 | 3.37 | 3.67 | 4.77 | 1.93 |
| *Tack at 32 °C, g-m* | | | | | | |
| mean tack | 64.8 | 56.5 | 51 | 63 | 52.5 | 62.6 |
| 60 stack | 70.4 | 65.5 | 58.5 | 71.2 | 59.6 | 67.7 |
| differential tack (60 - 600 s) | 8.5 | 10.5 | 10.6 | 11.8 | 10.3 | 6.4 |

The shortness index is defined (for these purposes) as the ratio of the ink's viscosities at 25 °C between 1 rad/s and 100 rad/s. The viscosity and tack results indicate that the Example inks are within a useful range for printing.

**Print Properties**

The inks (from each of the 3-roll milled Component "C" analogs of the illustrative Examples) were loaded onto a fixture equipped with an anilox roller (1000 lpi, 2.1 BCM available from Impreglon Cellramic) maintained at 45 to 50 °C temperature where ink was transferred first to a blanket at room temperature, then onto a receiving Clear Mylar® substrate and then cycled again such that 2 chase sheets were also generated to estimate the residual ink left on the blanket from the first transfer of ink onto the Clear Mylar® substrate. The Clear Mylar® substrate comprising the ink image and 2 chase sheets were then cured using a Phoseon FireJet™ J-200 C395 nm UV LED lamp at 1 m/s speed. There was some variability between the example inks as to the amount of ink that was transferred to the Clear Mylar® or Clear BOPP substrate; the range in L* was kept between 78 and 83 as measured with the cured print on Clear Mylar® or Clear BOPP substrate over a black substrate.

The coloristic characteristics and the relative opacities of the prints were determined with a X-Rite 528 spectrodensitometer (from X-Rite Corporation) measured using D50 illuminant and 2° observer generating OD Status T and CIELAB L*a*b* data. The L* of the print, made on BOPP or on Clear Mylar®, was assessed first with the print being over a black substrate (Astrobrights® Eclipse Black™ paper) and then over a white substrate (Xerox® Digital Color Elite Gloss paper), the %opacity of the print thus calculated as:

$$\text{➤ } \quad L^*(\text{print over black background}) / L^* (\text{print over white background})*100.$$

It is an advantage of this invention that the %opacity of prints made on transparent substrates from LED-cured inks is at least about 85, such as at least about 90, such as at least about 92. When opacity was determined in this manner, it was found that:

$$\text{➤ } \quad \%\text{Opacity} \sim 1.1 \times L^* \text{ (measured against black substrate)}.$$

It is also a desire for the LED-cured prints made on transparent substrates with white background to be neutral or near neutral with respect to a* and b* such that the magnitude of a* and b* should each be less than about 2 such as less than 1. This corresponds to the magnitude of a* and b* of prints made on transparent substrates with black background as each being less than about 4.

The print robustness tests pursued included a fingernail scratch test, a tape adhesion test, a print tack determination test and chemical rub test using Isopropanol. It is desirable that the resultant LED-cured prints have good robustness qualities: be resistant to scratching such as with a fingernail, be tack-free and have isopropanol solvent resistance at room temperature of at least 15 double rubs.

There was no robustness data for Example 1 ink as it was not printed. The Inks of Examples 11 and 12 were also not printed.

Table 4– Summary of Print Properties

| Print Property | Example 2 | Example 3 | Example 4 | Example 5 | Example 6 | Example 7 | Example 8 | Example 9 | Example 10 |
|---|---|---|---|---|---|---|---|---|---|
| Against black paper (L*=) | | | | | | | | | |
| OD | 0.15 | 0.21 | 0.20 | 0.21 | 0.21 | 0.28 | 0.30 | 0.28 | 0.29 |
| L* | 88.03 | 83.03 | 83.79 | 83.03 | 83.00 | 78.09 | 76.56 | 77.76 | 77.29 |
| a* | -1.87 | -1.78 | -1.84 | -1.78 | -1.67 | -1.55 | -1.58 | -1.57 | -1.81 |
| b* | -2.41 | -3.50 | -3.40 | -3..50 | -3.19 | -3.75 | -3.56 | -3.81 | -3.99 |
| | | | | | | | | | |
| Against white paper (L*=95) | | | | | | | | | |
| OD | 0.08 | 0.10 | 0.10 | 0.10 | 0.10 | 0.11 | 0.11 | 0.11 | 0.11 |
| L* | 92.75 | 91.88 | 91.59 | 91.88 | 91.37 | 90.64 | 90.49 | 91.06 | 90.53 |
| a* | -0.26 | -0.46 | -0.52 | -0.46 | -0.47 | -0.20 | -0.27 | -0.23 | -0.35 |
| b* | 0.28 | 0.39 | 0.49 | 0.39 | 0.47 | 0.35 | 0.41 | 0.37 | 0.35 |
| | | | | | | | | | |
| %Opacity | 94.9 | 90.4 | 91.5 | 90.4 | 90.8 | 86.2 | 84.6 | 85.4 | 85.4 |
| | | | | | | | | | |
| Adhesion (B rating), 5 best, 0 worst | 5 | 0 | 5 | 0 | 5 | 5 | 5 | 5 | 5 |
| Print Tacklness, 0 none, 1 some, 2 tacky | 0 | 0 | 0 | 0 | 0 | 0 | 0 | 0 | 0 |
| Fingernail scratch resistance, 0 none, 1 some, 2 heavy | 0 | 0 | 0 | 0 | 0 | 0 | 0 | 0 | 1 |
| IPA Double Rubs | 45 | 53 | 45 | 33 | 119 | 52 | 30 | 23 | 15 |
| | | | | | | | | | |
| | | | | | | | | | |

The majority of the resultant prints made from the inks of Examples 2 to 10 and 13 to 16 and were found to be tack-free, were fingernail scratch-resistant, had good adhesion on Clear Mylar® or Clear BOPP substrate and displayed acceptable isopropanol double rubs.

Table 4 (Continued)

| Print Property | Example 11 | Example 12 | Example 13 | Example 14 | Example 15 | Example 16 |
|---|---|---|---|---|---|---|
| Substrate | n/a | n/a | Clear BOPP | Clear BOPP | Clear BOPP | Clear BOPP |
| Against Black paper (L*=) | | | | | | |
| OD | - | - | - | - | - | - |
| L* | - | - | 82 | 85 | 84 | 83 |
| a* | - | - | - | - | - | - |
| b* | - | - | - | - | - | - |
| | | | | | | |
| Against white paper (L*=) | | | | | | |
| OD | - | - | - | - | - | - |
| L* | - | - | - | - | - | - |
| a* | - | - | - | - | - | - |
| b* | - | - | - | - | - | - |
| | | | | | | |
| %Opacity | - | - | est. ~90 | est. ~93 | est. ~92 | est. ~91 |
| | | | | | | |
| Adhesion (B rating), 5 best, 0 worst | - | - | 5 | 5 | 5 | 5 |
| Print Tackiness, 0 none, 1 some, 2 tacky | - | - | 0 | 0 | 0 | 0 |
| Fingernail scratch resistance, 0 none, 1 some, 2 heavy | - | - | 0 | 0 | 0 | 0 |
| IPA Double Rubs | - | - | >100 | >100 | >100 | >100 |

The example DALI ink compositions described herein were developed to absorb light and to be cured with UV LED lamps. The inks show good anilox roller acceptance and high transfer from anilox roller to receiving substrate such as Clear Mylar® substrate. The resultant radiation-cured prints were tack-free immediately after curing and had acceptable robustness qualities of adhesion of ink onto substrate and solvent resistance. This was achieved with a combination of components including, as an example: a white pigment, a pigment dispersant, a tetra-functional polyester acrylate, a high molecular weight acid modified epoxy diacrylate, a six-mole propoxylated trimethylolpropane triacrylate, an in-can stabilizer, a polyol resin and at least one photoinitiator absorbing in the wavelength range of the LED emission spectrum.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

While the present teachings have been illustrated with respect to one or more implementations, alterations and/or modifications can be made to the illustrated examples without departing from the spirit and scope of the appended claims. In addition, while a particular feature of the present teachings may have been disclosed with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and the claims, such terms are intended to be inclusive in a manner similar to the term "comprising." Further, in the discussion and claims herein, the term "about" indicates that the value listed may be somewhat altered, as long as the alteration does not result in non-conformance of the process or structure to the illustrated embodiment. Finally, "exemplary" indicates the description is used as an example, rather than implying that it is an ideal.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompasses by the following claims.

**Claims**

1. A white ink composition, comprising:

    an ink vehicle comprising at least one compound chosen from acrylate monomers, methacrylate monomers, acrylate oligomers and methacrylate oligomers;
    at least one polyol adhesive resin that is solid at 25°C;
    at least one photoinitiator; and
    at least one white colorant.

2. The composition of claim 1, wherein the ink vehicle comprises the acrylate oligomer and the acrylate monomer.

3. The composition of claim 2, wherein the acrylate monomer is a propoxylated trimethylolpropane triacrylate monomer.

4. The composition of claim 2, wherein the acrylate monomer is a tetrafunctional polyester acrylate oligomer.

5. The composition of claim 1, wherein the at least one polyol adhesive resin has a $T_g$ of about 80°C to about 150°C.

6. The composition of claim 1, wherein the at least one photoinitiator comprises 2,4,6-trimethylbenzoyl-diphenyl-phosphine oxide.

7. The composition of claim 1, wherein the at least one photoinitiator comprises a plurality of different photoinitiators.

8. The composition of claim 1, further comprising at least one in-can stabilizer.

9. The composition of claim 1, further comprising at least one polymeric dispersant.

10. The composition of claim 1, further comprising at least one additional ingredient chosen from thermal stabilizers, viscosity modifiers, fillers and combinations thereof.

11. The composition of claim 1, wherein the at least one white colorant is a pigment, the pigment being at a concentration ranging from about 40% to about 65% by weight, relative to the total weight of the ink composition.

12. A method for variable lithographic printing, comprising:

    applying a dampening fluid to an imaging member surface;
    forming a latent image by removing the dampening fluid from selective locations on the imaging member surface to form hydrophobic non-image areas and hydrophilic image areas;
    developing the latent image by applying a white ink composition to the hydrophilic image areas; and
    transferring the developed latent image to a receiving substrate,
    the white ink composition comprising:

        an ink vehicle comprising at least one compound chosen from acrylate monomers, methacrylate monomers, acrylate oligomers and methacrylate oligomers;
        at least one polyol adhesive resin that is solid at 25°C;
        at least one photoinitiator; and
        at least one white colorant.

13. The method of claim 12, wherein the ink vehicle comprises the acrylate oligomer and the acrylate monomer.

14. The method of claim 12, wherein the acrylate monomer is a propoxylated trimethylolpropane triacrylate monomer.

15. The method of claim 12, wherein the acrylate monomer is a tetrafunctional polyester acrylate oligomer.

16. The method of claim 12, wherein the at least one polyol adhesive resin has a $T_g$ of about 80°C to about 150°C.

17. The method of claim 12, wherein the at least one photoinitiator comprises 2,4,6-trimethylbenzoyl-diphenyl-phosphine oxide.

18. The method of claim 12, further comprising at least one in-can stabilizer.

19. The method of claim 12, further comprising at least one polymeric dispersant.

20. The method of claim 12, wherein the white colorant is a pigment, the pigment being at a concentration ranging from about 40% to about 65% by weight, relative to the total weight of the ink composition.

FIG. 1

Europäisches
Patentamt
European
Patent Office
Office européen
des brevets

# EUROPEAN SEARCH REPORT

Application Number

**EP 21 21 4119**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/077501 A1 (BRETON MARCEL [CA] ET AL) 19 March 2015 (2015-03-19) * claims; examples * ----- | 1-20 | INV. C09D11/037 C09D11/101 C09D11/03 |
| X | EP 3 336 150 A1 (XEROX CORP [US]) 20 June 2018 (2018-06-20) * claims; examples * ----- | 1-20 | C09D11/102 C09D11/104 |
| X | WO 2015/105668 A1 (SUN CHEMICAL CORP [US]; ZHANG YUEMEI [US] ET AL.) 16 July 2015 (2015-07-16) * examples; tables 5,6 * ----- | 1-20 | |
| X | WO 2020/212488 A1 (SUN CHEMICAL CORP [US]; ADAMS JOERG [DE]) 22 October 2020 (2020-10-22) * page 7, lines 14-20; claims; examples * ----- | 1-20 | |

TECHNICAL FIELDS
SEARCHED (IPC)

C09D

The present search report has been drawn up for all claims

| Place of search | Date of completion of the search | Examiner |
|---|---|---|
| Munich | 4 May 2022 | Schmitz, Volker |

EPO FORM 1503 03.82 (P04C01)

## ANNEX TO THE EUROPEAN SEARCH REPORT
## ON EUROPEAN PATENT APPLICATION NO.

EP 21 21 4119

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2022

| Patent document cited in search report | | Publication date | Patent family member(s) | | Publication date |
|---|---|---|---|---|---|
| US 2015077501 | A1 | 19-03-2015 | DE 102014217818 A1 | | 19-03-2015 |
| | | | JP 6271376 B2 | | 31-01-2018 |
| | | | JP 2015057476 A | | 26-03-2015 |
| | | | US 2015077501 A1 | | 19-03-2015 |
| EP 3336150 | A1 | 20-06-2018 | CA 2987353 A1 | | 13-06-2018 |
| | | | EP 3336150 A1 | | 20-06-2018 |
| | | | US 2018163064 A1 | | 14-06-2018 |
| WO 2015105668 | A1 | 16-07-2015 | EP 3092268 A1 | | 16-11-2016 |
| | | | JP 2017508031 A | | 23-03-2017 |
| | | | US 2016333203 A1 | | 17-11-2016 |
| | | | WO 2015105668 A1 | | 16-07-2015 |
| WO 2020212488 | A1 | 22-10-2020 | CN 113710755 A | | 26-11-2021 |
| | | | EP 3743473 A1 | | 02-12-2020 |
| | | | US 2021087413 A1 | | 25-03-2021 |
| | | | WO 2020212488 A1 | | 22-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003073762 A
- EP 1235863 A
- US 7723398 B

**Non-patent literature cited in the description**

- *CHEMICAL ABSTRACTS,* 870778-34-0
- *CHEMICAL ABSTRACTS,* 53879-54-2
- *CHEMICAL ABSTRACTS,* 75980-60-8